# EUROPEAN PATENT APPLICATION

(11) **EP 4 235 110 A1**
(43) Date of publication of application: **30.08.2023**
(21) Application number: 22158317.2
(22) Date of filing: 23.02.2022
(51) Int. Cl.: G01D 9/00, G06K 19/07, G06Q 10/08

(54) **A METHOD AND A SYSTEM FOR OPERATING A WIRELESS LOGGER DEVICE WHILE BEING ON BOARD OF AN AIRCRAFT**

(71) Applicant: Controlant hf., 201 Kopavogur (IS)
(72) Inventor: SIGURDSSON, Gisli Bergur, 201 Kopavogur (IS)
(74) Representative: Inspicos P/S

(57) **Abstract**

This invention relates to method of operating a wireless logger device configured to monitor an environmental related parameter of an asset at least while the asset is onboard of an aircraft and is transported by the aircraft from an origin location to a destination location, where the logger device comprises:
• a power source,
• at least one sensing device for regularly measuring the environmental related parameter resulting in environmental related data,
• a storage medium for storing the regularly measured environmental related data,
• a communication module,
• a processor for operating the power source, the at least one sensing device, the storage medium and the communication module,
wherein the method comprises:
• receiving, by the communication module, an aviation related signal periodically transmitted by the aircraft prior to take-off of the aircraft, where the received aviation related signal comprises flight data that uniquely identifies the aircraft and the position of the aircraft,
• transmitting, by the communication module, the received flight data to an external control computer, where prior to take-off of the aircraft,
• switching, by the processor, the logger device to a flight mode, the flight mode being a power mode where no transmission of the measured and stored environmental related data is performed by the communication module, and
• tracking, by the external control computer, the position of the aircraft using the received flight data as input data.

## Description

### FIELD OF THE INVENTION

The present invention relates to a wireless logger device, and to method and a system for operating a wireless logger device configured to monitor an environmental related data parameter of an asset at least when the asset is onboard of an aircraft prior to take-off and after landing.

### BACKGROUND OF THE INVENTION

With the expansion and growth of global sourcing in a supply chain, more prevalent interest has been placed on automatic electronic time and monitoring of environment related parameters to increase food and drug safety and improve food defense systems throughout all areas of production, processing, storage and transportation and operations. Food and drug require proper handling of environment related parameters such as temperature during transport to assure shelf quality, longevity, and safety.

Logger devices are electronic monitoring devices commonly used for these purposes, namely, to be associated to assets such as food, beverages or drugs to automatically monitor and record various environmental related parameters of the assets throughout a supply chain, such as temperature, humidity, acceleration, and air pressure, over time. A recent example of importance of such logger devices is the temperature monitoring of the COVID-19 vaccines, which is a key critical monitoring parameter.

Many restrictions exist regarding the use and operations of logger devices aboard aircrafts. Logger devise capable of wireless transmission of data are commonly not allowed to be used onboard aircrafts unless certain permissions are present, but these include obviously the requirement that the logger devices are shut down or placed in a flight mode during flight.

Other types of logger devices where this is of no concern are logger devices that are not capable of wireless transmission, typically single use logger devices.

Logger devices used for real time monitoring have a wireless communication module to allow them to transmit position data of the logger devices together with measured environmental related data wirelessly and, in that way, enable a real time supply chain monitoring during the transport of the assets. This means that position data of the logger device (and thus of the asset) together with measured environmental data such as the temperature of the assets are provided in real time. By doing so, it is possible to monitor the position and the environmental condition of the assets in real time. Thus, issues such as too high or low temperature of the assets may be identified before these issues escalate which allows for proactive actions.

Therefore, when such real time logger devices are used in an aircraft, they must as already mentioned be placed in a flight mode where they are capable of measuring and storing the environmental related data such as temperature but are not capable of transmitting any data during the flight.

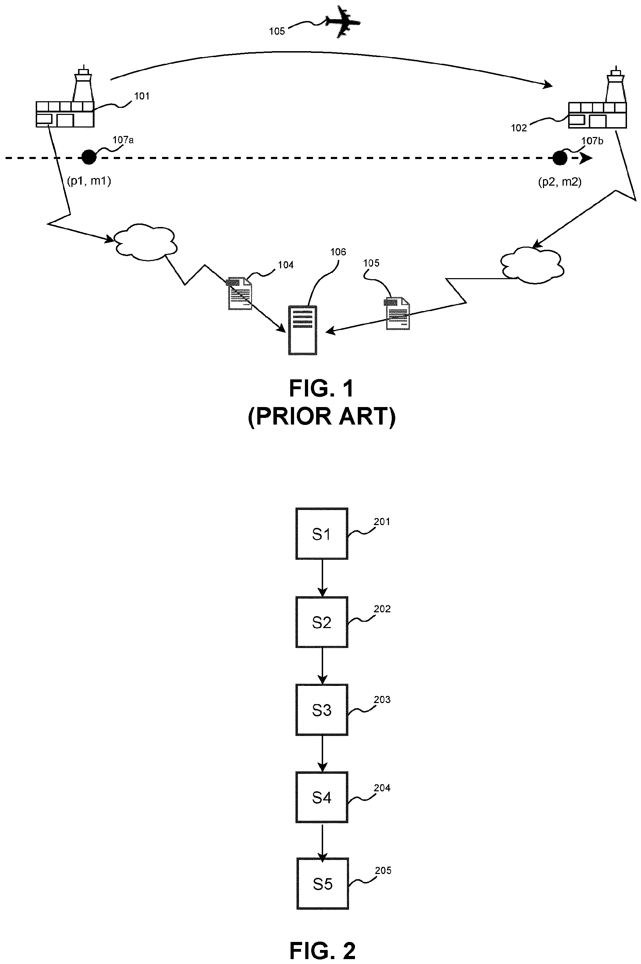

Figure 1 depicts a prior art solution showing an aircraft 105 carrying an asset with an associated logger device (not shown) leaving an origin location 101 and heading to a destination location 102.

Prior to takeoff, position data together with measured environmental data 104 is transmitted to an external data processing device 106 (which may be any type of a cloud platform), which gives a first data point (p1, m1) 107a where p1 is the position data at the origin location 101 and m1 is the measurement point at the origin location (this could as an example be the temperature of the asset at the origin location).

After arrival at a destination location 102, the logger device is either manually or automatically put in a higher-energy mode where the logger device transmits all measured data 105 during the flight together with the position data at the destination location 102, resulting in a second data point (p2, m2) 107b, where p2 is the position data at the destination location and m2 is the measurement data during the flight.

The information the logger devices are provided with is namely the origin location and destination location, and it is even not uncommon that the transport route is not known in advance, i.e. whether the transport is via ship, vehicle, train or flight.

The position data for the asset in the time-period between the takeoff and landing is a "black box" but this time-period can be tens of hours which results in a zero data visibility in the position during the flight. When the asset is a very sensitive asset such as said COVID-19 vaccines or any other types of medicine, food or beverages, a good data quality of the position of the aircraft is extremely important.

Such a lack of data visibility can have severe impact. One possible scenario as an example is where due to unforeseen circumstances the aircraft has to change flight route due to e.g. weather conditions or motor failure, and has to do one (or more) stopover(s). Such unforeseen circumstances will not be visible towards the supplier (and the monitoring agency) of the medicine because only the origin starting location and the destination location is known. This means that if flight time changes from being e.g. 10 hours to e.g. 25 hours, or even several days, this time delay may be very critical and may result in that issues such as too high or low temperature of the asset will not be identified in due time.

Other scenario is where the flight is schedule via several stop overs, but the fact that that flight information is not known does results in that the only data that becomes available is at the origin location and the destination location.

### SUMMARY OF THE INVENTION

It is an object of the invention to enhance data visibility when a logger device is associate to an asset that is transported by an aircraft from an origin location to a destination location.

In general, the invention preferably seeks to mitigate, alleviate or eliminate one or more of the above-mentioned disadvantages of the prior art singly or in any combination. In particular, it may be seen as an object of embodiments of the present invention to provide a method, a wireless logger device and a system that solves the above-mentioned problems, or other problems.

To better address one or more of these concerns, in a first aspect of the invention a method is provided for operating a wireless logger device configured to monitor an environmental related data parameter of an asset at least when the asset is onboard of an aircraft during take-off and landing, where the logger device comprises:
- a power source,
- at least one sensing device for regularly measuring the environmental related parameter resulting in environmental related data,
- a storage medium for storing the regularly measured environmental related data,
- a communication module,
- a processor for operating the power source, the at least one sensing device, the storage medium and the communication module,
wherein the method comprises:
- receiving, by the communication module, an aviation related signal periodically transmitted by the aircraft prior to take-off of the aircraft, where the received aviation related signal comprises flight data that uniquely identifies the aircraft and the position of the aircraft,
- transmitting, by the communication module, the received flight data to an external control computer, where prior to take-off of the aircraft,
- switching, by the processor, the logger device to a flight mode, the flight mode being a power mode where the environmental related parameter is regularly measured and the resulting environmental related data is stored, preferably with time-stamps, but where no transmission of the measured and stored environmental related data is performed by the communication module, and
- tracking, by the external control computer, the position of the aircraft after take-off of the aircraft using the received flight data as input data.

Accordingly, the fact that the external control computer takes over the tracking of the aircraft via the received flight data, which in an embodiment may comprise Automatic Dependent Surveillance-Broadcast (ADS-B) signal, enables real-time position tracking of the aircraft even though the logger device is not transmitting any data during the flight.

The tracking of the position may in one embodiment include position data with timestamp, and/or pre-defined frequency of the position tracking, e.g. every minute, or every 5 minutes etc..

Having such a real-time position tracking enables identifying issues before they escalate and thus allows for proactive actions. As an example, change of flight route due to unforeseen circumstances where the aircraft may have to make one or more stopovers will be visible in real-time.

As an example, some of the COVID-19 vaccines must be kept at around -80°C during transport where dry ice is used to maintain it at this very low temperature but maintaining this very low temperature is only possible for a limited amount of time, until more dry ice must be added. Thus, having this real-time data visibility enables acting on such unforeseen circumstances and thus prevent the vaccine from being destroyed.

The step of tracking the position of the aircraft after take-off may in an embodiment comprise communicating with an external flight tracking module from take-off until landing of the aircraft. The term flight tracking module may according to the present invention be understood any kind of software, platform, services that are capable of tracking positions of aircrafts along with preferably other flight details in real time. Accordingly, this may be done by means of tracking the position via communication with GPS satellites which enables passing detailed real-time data on the flight variables to a server on the ground with which the external control computer may communicate with. This may as an example be explained in that the aircraft gets its location from a GPS navigation source (satellite). In an embodiment, the aircraft contains an ADS-B transponder that transmits signal containing amongst others the location of the aircraft. The flight tracking module then picks up the ADS-B signal and therefore the control computer.

In an embodiment, the transport from the origin location to the destination location further includes at least one stopover, wherein the step of using the received flight data as input data comprises identifying the flight route of the aircraft from the origin location to the destination location including the at least one stopover. This would as an example be the scenario where the flight data may be utilized in identifying a detailed scheduled flight route, e.g. which stopovers are scheduled, arrival time(s), departure time(s) etc.. Thus, it is known in advance what how the flight route is scheduled in advance.

In an embodiment, the step of identifying the at least one stopover, which may e.g. be done via said external flight tracking module, is utilized in determining one or more subsequent locations where transmission of measured environmental related data together with timestamps and position data of the aircraft to the external control computer is performed. Knowing the position of at least one stopover enables downloading the measured environmental related data to the external control computer at the one or more stopover, meaning that the real-time measurement data resolution in the time-period from takeoff until landing of the aircraft is improved. This means that if e.g. the environmental related data is temperature of the asset, and temperature goes above a certain reference value during this time period, this may be identified during the stopover meaning it may be possible to act thereon and safe the asset.

In an embodiment, the at least one sensing device comprises a barometer for measuring air pressure, the method further comprising:
- determining difference between a measured air pressure value and previously measured air pressure value, where in case the difference exceeds a pre-defined pressure value,
- issuing a take-off command indicating take-off or expected take-off of the aircraft, and
- issuing a landing command indicating that the aircraft is landing or is landed in case the difference is below a pre-defined pressure value.

In another embodiment, the at least one sensing device comprises an accelerometer configured to sense vibration from the aircraft, the method further comprising:
- determining difference between a measured vibration and previously measured vibration, where in case the difference exceeds a pre-defined vibration value,
- issuing a take-off command indicating take-off or expected take-off of the aircraft, and
- issuing a landing command indicating that the aircraft is landing or is landed in case the difference is below a pre-defined vibration value.

In an embodiment, these two different embodiments in identifying take-off and landing are utilized as two separate measuring techniques which may be a requirement from Federal Aviation Administration (FAA), where e.g. it may be sufficient that one out of the two measuring techniques identifies take-off which results in the issued take-off command.

In an embodiment, the method further comprises automatically switching, in response to the issued take-off command, the logger device to the flight mode, and in response to the issued landing command, the logger device from the flight mode to higher-power mode, the higher-power mode being a power mode where transmission by the communication module takes place and where the measured and stored environmental related data with time-stamps is transmitted to the control computer together with the position data of the logger device.

Accordingly, a solution is provided to automatically switch the logger device to a flight mode prior to or during takeoff, but this may be performed by the processor of the logger device, or by the control computer. In the same way, prior to or after landing, the logger device may be switched automatically to the higher-energy mode, where measured environmental related data may be transmitted to the control computer. By operating the logger device in such an automatic way manual mistakes such as forgetting turning the logger device to a flight mode prior to takeoff, and/or turning it to a higher power-mode after landing is avoided.

In an embodiment, the tracked position of the aircraft is utilized in associating the measured environmental related data measured at different positions of the aircraft with associated tracked position data at these different positions. Accordingly, it is now possible to link different measurement data to the position data of the aircraft where the measurement took place meaning the data resolution may be highly improved. As an example, if temperature measurements are performed every 10 minutes, and the time until first stopover is 60 minutes, after landing the aircraft, the 6 temperature measurements may be associated to the position data where the temperature measurement took place. In this example, this would result in 6 data points, namely (p1,m1) - (p6,m6), where p1 is the first position data and m1 is the measurement point at p1 etc.. Thus, when the measured data is transmitted to the control computer the control computer may generate such a "sync" of the data points. It is thus possible to monitor the status of the measured environmental data together with the position retroactively and identify exactly where a possible deviation of measured data from a reference data took place, if a deviation occurred.

In one embodiment, subsequent to the step of issuing the take-off command, the resulting measured environmental related parameter value(s) is transmitted by the communication module to the control computer, followed by switching the logger device to the flight mode. This is to ensure that just before switching the logger device to the flight mode, all the most recent measured data are transmitted so as to ensure optimal data resolution. Referring to the example above, this may be seen as the first data point (p1,m1).

In one embodiment, the method further comprises, in case of detecting two or more different aviation related flight data transmitted from two or more aircrafts are in the vicinity of the logger device prior to take-off, the two or more different flight data are compared with pre-stored data associated to the data logger, where the pre-stored data is selected from, but is not limited to: final destination data, intermediate stop data, aircraft identification data, partial or complete routing information associated to the data logger, where the aviation related flight data having at least one match with the pre-stored data is identified as the true flight data. It is thus possible to automatically distinguish between two or more flight number which one is the right one.

In one embodiment, the at least one measured environmental related parameter includes one or more selected from: ambience temperature of the asset, ambience humidity of the asset, acceleration or vibration, orientation, light intensity, air-pressure.

In a second aspect of the invention, a wireless logger device is provided configured to monitor an environmental related data parameter of an asset at least when the asset is onboard of an aircraft during take-off and landing, where the logger device comprises:
- a power source,
- at least one sensing device for regularly measuring the environmental related parameter resulting in environmental related data,
- a storage medium for storing the regularly measured environmental related data,
- a communication module,
- a processor for operating the power source, the at least one sensing device, the storage medium and the communication module,
wherein the communication module comprises a receiver for receiving an aviation related signal periodically transmitted by the aircraft prior to take-off of the aircraft, where the received aviation related signal comprises flight data that uniquely identifies the aircraft and the position of the aircraft,
wherein the communication module is configured to transmit the received flight data to a control computer,
wherein the processor is configured to, prior to take-off of the aircraft, switching the logger device to a flight mode, the flight mode being a power mode where the environmental related parameter is regularly measured and the resulting environmental related data is stored but where no transmission of the measured and stored environmental related data is performed by the communication module, where the processor is further configured to instruct the control computer to track the position of the aircraft after take-off of the aircraft using the received flight data as input data.

In a third aspect of the invention, a system is provided for operating a wireless logger device configured to monitor at least one environmental parameter of an asset when the asset is onboard of an aircraft during take-off and landing, where the system comprises:
- a logger device comprising:
   ∘ a power source,
   ∘ at least one sensing device for regularly measuring the environmental related parameter resulting in environmental related data,
   ∘ a storage medium for storing the regularly measured environmental related data,
   ∘ a communication module,
   ∘ a processor for operating the power source, the at least one sensing device, the storage medium and the communication module,
- a control computer,
wherein the communication module is configured for receiving an aviation related signal periodically transmitted by the aircraft prior to take-off of the aircraft, where the received aviation related signal comprises flight data that uniquely identifies the aircraft and the position of the aircraft, and transmitting the received flight data to the control computer, where prior to take-off of the aircraft, the processor of the logger device switches the logger device to a flight mode, where the at least one measured environmental related parameter are regularly measured and stored in the storage medium, the flight mode further being where no transmission by the communication module takes place, and
wherein the control computer is configured to track the aircraft after take-off of the aircraft via the received flight data uniquely identifying the aircraft.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 depicts prior art solution showing an aircraft carrying an asset and associated logger device (not shown) leaving an origin location.
Figures 2 shows a flowchart of a method according to the present invention of operating a wireless logger device configured to monitor an environmental related parameter of an asset at least while the asset is onboard of an aircraft and is transported by the aircraft from an origin location to a destination location,
Figures 3 to 6 illustrate graphically exemplary embodiments of the method steps in figure 2,
Figure 7 depicts graphically the resolution of the data points from the origin location 601 in figure 2, until arrival at the destination location in figure 5 where the aircraft is landed, and
Figure 8 depicts another scenario of figure 7, where an initial route from the origin location to the destination location as illustrated in figure 7 has been changed.

### DESCRIPTION OF EMBODIMENTS

Figures 2 shows a flowchart of a method according to the present invention for operating a wireless logger device configured to monitor an environmental related parameter of an asset at least while the asset is onboard of an aircraft and is transported by the aircraft from an origin location to a destination location.

The asset may be selected from, but is not limited to, sensitive product such as medicine, food or beverages, where the environmental related parameter may be selected from being the ambience temperature or temperature of the product, the humidity, the vibration, the light intensity and other environment related parameters.

In a first step (S1) 201, an aviation related signal that is periodically transmitted by the aircraft prior to take-off of the aircraft is received by the logger device. The received signal comprises amongst others information such as flight data that uniquely identifies the aircraft and the position of the aircraft.

In a second step (S2) 202, the received flight data is transmitted by the logger device to an external control computer, prior to take-off of the aircraft.

In a third step (S3) 203, the logger device is switched to a flight mode, where the flight mode is a power mode where the measurement of the environmental related parameter takes place on a regular basis, e.g. every 10 minutes, and where the resulting data is stored in a memory of the logger device together with time-stamps.

In one embodiment, the step of switching to flight mode is an automatic process. The at least one sensing device may in one embodiment comprise a barometer for measuring ambience air pressure. In this embodiment, the method comprises determining the difference between a measured air pressure value and previously measured air pressure value in the compartment of the aircraft where the product together with the logger device is kept. If the difference exceeds a pre-defined pressure value in the compartment a take-off command is issued indicating take-off or expected take-off of the aircraft. This take-off command may either be used as an input command by the processor in the logger device or by the control computer, to place the communication module and the logger device into a flight mode.

In another embodiment, the step of switching to flight mode is also an automatic process the at least one sensing device comprises an accelerometer configured to detect acceleration data such as vibration from the aircraft, where the difference is determined between a measured vibration and previously measured vibration, where in case the difference exceeds a pre-defined vibration value, a take-off command issued indicating take-off or expected take-off of the aircraft. As discussed above, this take-off command may either be used as an input command by the processor in the logger device, by the control computer, to place the communication module and the logger device into a flight mode.

In a fourth step (S4) 204, the position of the aircraft is tracked using the received flight data as input data while transporting the asset from the origin location to the destination location. As will be discussed in more details later, this may be done using the received flight data in connecting to an external tracking service to track the aircraft.

In a fifth step (S5) 205, after landing the aircraft the logger device is switched to a higher energy mode, and subsequently the measured data, which may be temperature data, vibration data, humidity etc. that has been measured during the flight is transmitted to the control computer. As will be discussed later, these measured data may be associated to the tracked position data of the aircraft.

Similarly, and as discussed previously, the switching to the higher energy mode may be done automatically, using either the measured vibration or the air pressure, where in case said measured difference is below a pre-defined given threshold value for either the pressure and/or the vibration, a landing command is issued indicating that the logger device may be switched in a similar way automatically to higher energy mode, e.g. by turning on the modem comprised in the communication module so as to allow the modem to connect to a cellular network such as 2G-5G network.

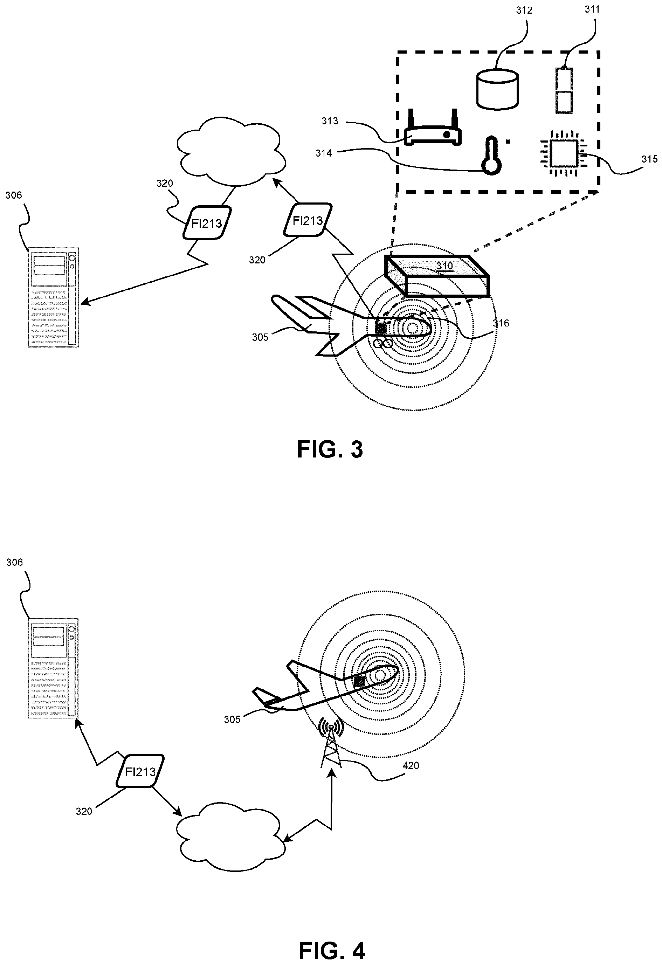

Figures 3 to 6 illustrate graphically exemplary embodiments of steps S1 - S4 in the flowchart of figure 2.

Figure 3 shows an aircraft 305 prior to takeoff, carrying the asset which as already mentioned may be medicine, food and/or beverages and where the logger device 310 is associated to the asset, e.g. attached to it or kept in a closed environment where the asset is kept, e.g. in a closed box or in a container.

The logger device 310 comprises a power source 311, which may be one or more rechargeable batteries, at least one sensing device 314 for regularly measuring the environmental related parameter resulting environmental related data, a storage medium 312 for storing the regularly measured environmental related data, a communication module 313 which comprises a modem to e.g. communicate to a cellular network, and a processor 315 for operating the power source, the at least one sensing device, the storage medium and the communication module.

An aviation related signal 316 is transmitted by the aircraft 305 prior to take-off that is received by communication module 313 that transmits the aviation related signal containing data 320 that uniquely identifies the aircraft and the position of the aircraft to the external control computer 306. This signal may in one embodiment be Automatic Dependent Surveillance-Broadcast (ADS-B) signal.

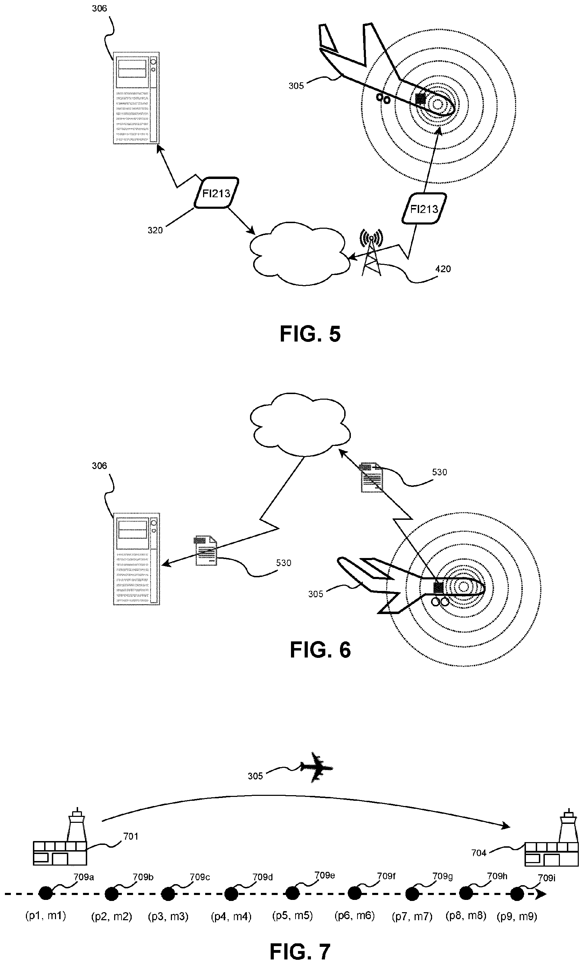

The control computer 306 then communicates with an external flight tracking module 420 from take-off until landing of the aircraft as depicted in figures 4 and 5, where figure 4 depicts the aircraft during take-off and figure 5 depicts the aircraft during landing.

The step of tracking the position of the aircraft may as an example be explained in that the aircraft gets its location from a GPS navigation source such as satellite(s), where the aircraft may contain an ADS-B transponder that transmits the signal containing amongst others the location of the aircraft to the flight tracking module 420. The flight tracking module may comprise ADS-B tower(s) that pick up the ADS-B signal, where the control computer then tracks the position of the aircraft through the communication with the ADS-B tower(s). This should not be construed as being limited to this technique, but other techniques well known to a person skilled in the art may just as well be implemented.

Figure 6 depicts a scenario where the aircraft 305 is landed and the measured and stored data 530 are transmitted to the control computer 306.

Figure 7 depicts graphically the resolution of the data points from the origin location 701 in figure 3, until arrival at the destination location 704 in figure 6 where the aircraft is landed, where for simplicity it is assumed that there are no stopovers during the flight.

The position of the aircraft 305 is tracked by the control computer 306, which may e.g. include registering the position of the aircraft every x minutes until the aircraft lands at the destination location 704. For simplicity, assuming the measurement of the environmental related parameter such as the temperature is performed every x minute, upon arrival at the destination location, where subsequently the temperature measurements are transmitted to the control computer. The control computer has all necessary data to link the position data to the measurement data 709a-709i, in this simplified view, (p1,m1)=(position data at origin, measurement at origin), (p2,m2)=(position data after 10 min, measurement after 10 min), .... , (p9,m9)=(position data at the destination location, measurement at the destination).

This data resolution can of course be much more detailed, or less detailed, depending on preferences, but the advantages is that now it is possible to provide tracking data, where the position data of the aircraft is a real time data available during the flight, whereby as just explained the actual measurement data may subsequently be "synced" after arrival at the final destination.

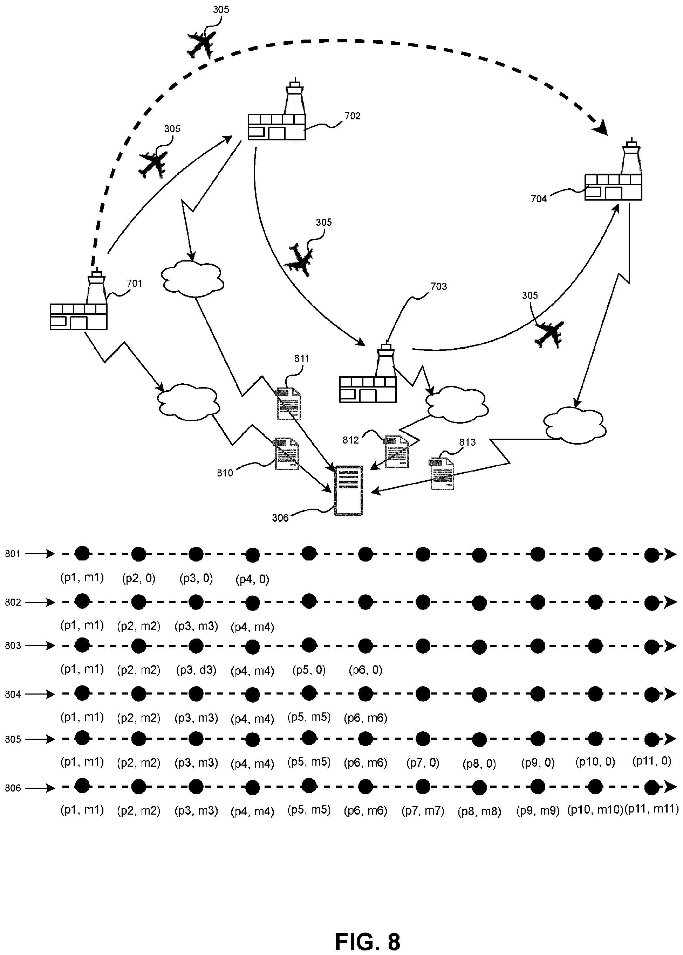

Figure 8 depicts another scenario of figure 7, where an initial route from the origin location 701 to the destination location 704 as illustrated in figure 7 and indicated by the dotted arrow has e.g. been changed due to unforeseen circumstances, or they may simply be the planned flight route.

In this exemplary scenario the aircraft 305 does two stopovers at airport 702 and airport 703, where at the origin location, measurement data 810 are sent prior to takeoff of the aircraft 305. This may as an example be the temperature, humidity, vibration, light intensity, or a combination thereof of the asset prior to takeoff.

The first stopover is at destination 702, where during the flight the position data (p1, d1)-(p4, 0) are accumulated as real-time position data, this is illustrated in the dotted time-line 801, where "0" is due to that fact that no measurement data is yet available, and m1 is the measured data at the origin location.

Upon landing the aircraft 305 at destination 702, all the measured data during the flight from the origin location 701 until arrival at 702 is transmitted to the control computer 306. As mentioned previously, not only is the position data of the aircraft available in real time, but the measured data measured during the flight may be synced to the position data, which results in the data points as illustrated in 802, namely (p1, m1) - (p4, m4).

The same applies from the takeoff from destination 702 until arrival at destination 703, where the position data during the flight are provided as real time data, which explain the additional data (p5, 0) and (p6, 0) in 803, where it is not until landing where the measured data 812 during the flight from 703 to 703 are transmitted to the control computer 306, and may be linked to the p5 and p6 position data, resulting in (p5, m5) and (p6, m6) as indicated in 804.

Finally, the last link is from the destination 703 to the final destination 704, where, as explained above the position data of the aircraft/shipment as provided as a real-time data 805 followed additionally with the measured data after landing 813, which may subsequently be synced to the position data as shown in 806.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method of operating a wireless logger device (310) configured to monitor an environmental related parameter of an asset at least while the asset is onboard of an aircraft (305) and is transported by the aircraft from an origin location (701) to a destination location (704), where the logger device comprises:
• a power source (311),
• at least one sensing device (314) for regularly measuring the environmental related parameter resulting in environmental related data,
• a storage medium (312) for storing the regularly measured environmental related data,
• a communication module (313),
• a processor (315) for operating the power source, the at least one sensing device, the storage medium and the communication module,
wherein the method comprises:
• receiving (201), by the communication module, an aviation related signal periodically transmitted by the aircraft prior to take-off of the aircraft, where the received aviation related signal comprises flight data that uniquely identifies the aircraft and the position of the aircraft,
• transmitting (202), by the communication module, the received aviation related flight data to an external control computer, where prior to take-off of the aircraft,
• switching (203), by the processor, the logger device to a flight mode, the flight mode being a power mode where the environmental related parameter is regularly measured and the resulting environmental related data is stored but where no transmission of the measured and stored environmental related data is performed by the communication module, and
• tracking (204), by the external control computer, the position of the aircraft after take-off of the aircraft using the received flight data as input data.

2. The method according to claim 1, wherein the received aviation related signal comprises Automatic Dependent Surveillance-Broadcast (ADS-B) signal.

3. The method according to claim 1 or 2, wherein the step of tracking the position of the aircraft after take-off comprises communicating with an external flight tracking module from take-off until landing of the aircraft.

4. The method according to any of the preceding claims, wherein the transport from the origin location to the destination location further includes at least one stopover, wherein the step of using the received flight data as input data comprises identifying the flight route of the aircraft from the origin location to the destination location including the at least one stopover.

5. The method according to claim 4, wherein the step of identifying the at least one stopover is utilized in determining one or more subsequent locations where transmission of measured environmental related data together with position data of the aircraft to the external control computer is performed.

6. The method according to any of the preceding claims, wherein the at least one sensing device comprises a barometer for measuring air pressure, the method further comprising:
• determining difference between a measured air pressure value and previously measured air pressure value, where in case the difference exceeds a pre-defined pressure value,
• issuing a take-off command indicating take-off or expected take-off of the aircraft, and
• issuing a landing command indicating that the aircraft is landing or is landed in case the difference is below a pre-defined pressure value.

7. The method according to any of the preceding claims, wherein the at least one sensing device comprises an accelerometer configured to sense vibration from the aircraft, the method further comprising:
• determining difference between a measured vibration and previously measured vibration, where in case the difference exceeds a pre-defined vibration value,
• issuing a take-off command indicating take-off or expected take-off of the aircraft, and
• issuing a landing command indicating that the aircraft is landing or is landed in case the difference is below a pre-defined vibration value.

8. The method according to claim 6 or 7, further comprising automatically switching, in response to the issued take-off command, the logger device to the flight mode, and in response to the landing command, the logger device from the flight mode to higher-power mode, the higher-power mode being a power mode where transmission by the communication module takes place and where the measured and stored environmental related data is transmitted to the control computer together with the position data of the logger device.

9. The method according to claim 8, wherein the tracked position of the aircraft is utilized in associating the measured environmental related data measured at different positions of the aircraft with associated tracked position data at these different positions.

10. The method according to claims 8 or 9, wherein subsequent to the step of issuing the take-off command, the resulting measured environmental related parameter value(s) is transmitted by the communication module to the control computer, followed by switching the logger device to the flight mode.

11. The method according to any of the preceding claims, further comprising, in case of detecting two or more different flight data are transmitted from two or more aircrafts in the vicinity of the logger device prior to take-off, the two or more different flight data are compared with pre-stored data associated to the data logger, where the pre-stored data is selected from: final destination data, intermediate stop data, aircraft identification data, partial or complete routing information associated to the data logger, where the flight data having at least one match with the pre-stored data is identified as the true flight data.

12. The method according to any of the preceding claims, wherein at least one measured environmental related parameter includes one or more selected from: ambience temperature of the asset, ambience humidity of the asset, acceleration or vibration, light intensity, air-pressure.

13. A wireless logger device configured to monitor an environmental related data parameter of an asset at least when the asset is onboard of an aircraft during take-off and landing, where the logger device comprises:
• a power source,
• at least one sensing device for regularly measuring the environmental related parameter resulting in environmental related data,
• a storage medium for storing the regularly measured environmental related data,
• a communication module,
• a processor for operating the power source, the at least one sensing device, the storage medium and the communication module,
wherein the communication module comprises a receiver for receiving an aviation related signal periodically transmitted by the aircraft prior to take-off of the aircraft, where the received aviation related signal comprises flight data that uniquely identifies the aircraft and the position of the aircraft,
wherein the communication module is configured to transmit the received flight data to a control computer,
wherein the processor is configured to, prior to take-off of the aircraft, switching the logger device to a flight mode, the flight mode being a power mode where the environmental related parameter is regularly measured and the resulting environmental related data is stored but where no transmission of the measured and stored environmental related data is performed by the communication module, where the processor is further configured to instruct the control computer to track the position of the aircraft after take-off of the aircraft using the received flight data as input data.

14. A system for operating a wireless logger device configured to monitor at least one environmental parameter of an asset when the asset is onboard of an aircraft during take-off and landing, where the system comprises:
• a logger device comprising:
∘ a power source,
∘ at least one sensing device for regularly measuring the environmental related parameter resulting in environmental related data,
∘ a storage medium for storing the regularly measured environmental related data,
∘ a communication module,
∘ a processor for operating the power source, the at least one sensing device, the storage medium and the communication module,
• a control computer,
wherein the communication module is configured for receiving an aviation related signal periodically transmitted by the aircraft prior to take-off of the aircraft, where the received aviation related signal comprises flight data that uniquely identifies the aircraft and the position of the aircraft, and transmitting the received flight data to the control computer, where prior to take-off of the aircraft, the processor of the logger device switches the logger device to a flight mode, the flight mode being a power mode where the environmental related parameter is regularly measured and the resulting environmental related data is stored but where no transmission of the measured and stored environmental related data is performed by the communication module, and
wherein the control computer is configured to track the aircraft after take-off of the aircraft via the received flight data uniquely identifying the aircraft.
